Europäisches Patentamt

European Patent Office

Office européen des brevets

(11) Publication number: **0 371 911**
**A2**

(12) # EUROPEAN PATENT APPLICATION

(21) Application number: **89810002.9**

(22) Date of filing: **03.01.89**

(51) Int. Cl.⁵: **F16N 7/32**

(30) Priority: **01.12.88 CH 4450/88**

(43) Date of publication of application:
**06.06.90 Bulletin 90/23**

(84) Designated Contracting States:
**AT BE DE ES FR GB GR IT LU NL SE**

(71) Applicant: **Tecnodelta S.A.**
**Centro Nord-Sud 1**
**CH-6934 Bioggio(CH)**

(72) Inventor: **Mantovani, Elis**
**Via Camara 46**
**CH-6932 Breganzona(CH)**

(74) Representative: **Baggiolini, Raimondo et al**
**Patent Attorneys**
**Fiammenghi-Fiammenghi-Racheli Via San**
**Gottardo 15**
**CH-6900 Lugano(CH)**

(54) **Process for lubrication of antifriction bearings in a closed circuit by a gas current that carries a lubricating fluid and relative device for embodying the process.**

(57) The process makes possible lubrication of bearings, in particular of the antifriction type for high rotation speeds by injection of a pressurized gas current that carries the nebulized lubricating fluid along a closed circuit without communication with the outside.

This fluid is injected into the friction zones of bearings (3-3') which lubricates by rapidly going through them without causing stagnations of the lubricant, and being carried, without being able to go out into the outside environment, by collectors (4, 4') and feed ducts (5) into the liquid contained in a collection tank (6), where the fluid, which is separated from the carrier gas, can then be separated from the liquid by decanting or similar processes and optionally recycled.

## Process for lubrication of antifriction bearings in a closed circuit by a gas current that carries a lubricating fluid and relative device for embodying the process

The main problems are numerous that accompany lubrication of rotating bearings, in particular of those subjected to high temperatures and stresses due to the very high speed of use in modern technical applications.

One of the most notable is represented by the danger of stagnation of the lubrication in the friction zone.

The lubrication, at high temperatures, if it stagnates even just a little in the grooves or on the rotating bodies of the bearings, by the effect of the degeneration or "cracking" of its molecules, creates carbon deposits or, in any case, solids, which worsening the coefficient of friction, trigger a chain process of overheating and increase of solid deposits until the bearing is rapidly put out of operation.

To eliminate this drawback recourse is had in practice to lubrication by a nebulized lubricating fluid carried by a pressurized gas current, obtaining good lubrication results and life of the bearings.

But unfortunately, in applications known so far by the inventor another problem arises, perhaps even more serious, caused by pollution of the surrounding environment, due to the outward dispersion of the nebulized lubricating fluid which is highly toxic for persons that inhale it.

The object of this invention is a process to perform the lubrication of rotating bearings and in particular antifriction bearings for high rotation speeds, by injection of a gas current that carries a nebulized lubricating fluid, characterized in that this current is injected under pressure in a closed circuit without any communication with the outside, goes through the friction zones of the bearings from which the particles of nebulized lubricant, as soon as the lubrication has been performed, not to cause any stagnation, are immediately expelled into collectors from which, by feed pipes, they are then carried to the liquid contained in a collection tank where the lubricating fluid is separated from the carrier gas, remaining in emulsion in said liquid, to be able then to be separated by decanting or other processes with similar results.

Also the object of the invention is the device embodying the above-mentioned process, characterized by the characterizing part of claim 2.

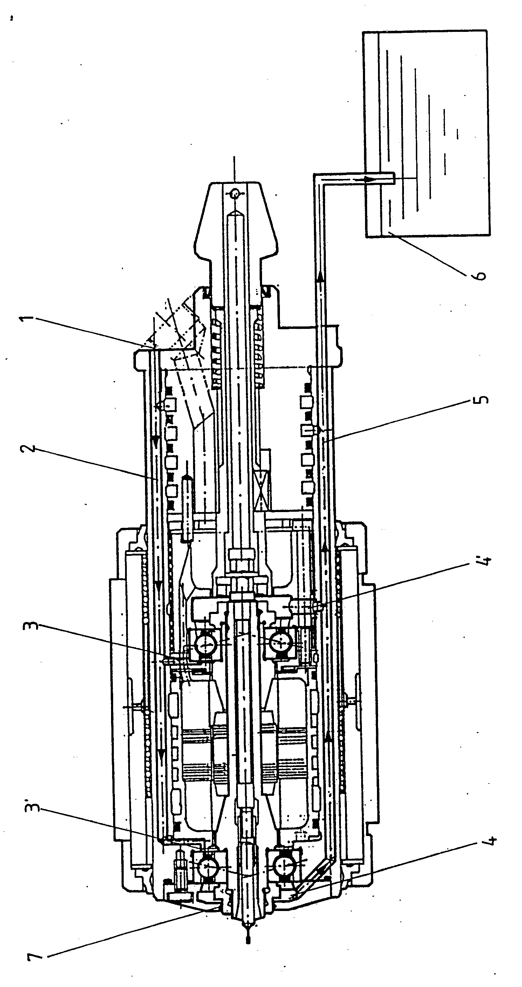

Figure 1 diagrammatically represents a view in longitudinal section of a machine tool for micro work at high speed, in which the closed-circuit lubricating process according to the invention is applied by means of the relative embodying device whose function is described below: the lubricating current is injected under pressure into the intake or intakes of circuit 1, reaching the bearings by distribution ducts 2 and immediately leaving them, then to flow in collectors 4, 4' and be carried, by ducts 5, to the liquid contained in a collection tank 6, where the particles of lubricant are separated from the carrier gas, being emulsified with the liquid (for example, water) contained there, from which they can be separated by decanting, centrifuging, or processes with similar results.

Application of ordinary oil baffles 7 (for example, of the labyrinth type) around the rotating parts licked by the lubricant current can easily prevent even the slightest amount of nebulized lubricant from going out into the surrounding environment.

In this way there are brilliantly solved, without the use of complex equipment, both the problem of continuously removing the lubricating film before temperatures dangerous for its molecular structure and the problem of pollution of the environment caused by dispersion of the nebulized lubricant. Especially in many cases it is position to consider recycling the recovered lubricant, with a consequent reduction of costs.

The figure represents a particular case of application of the process, which obviously can be extended to any machine or rotating element using of antifriction bearings and therefore is not to be considered as binding or limiting.

### Claims

1. Process to perform the lubrication of rotating bearings and in particular antifriction bearings, by injection of a gas current that carries a nebulized lubricating fluid, characterized in that this current is injected under pressure in a closed circuit (1) without any communication with the outside, goes through the friction zones of bearings (3,3') from which the particles of nebulized lubricant, as soon as the lubrication has been performed, not to cause any stagnation, are immediately expelled into collectors (4, 4') from which, by conduction pipes (5), are then carried to the liquid contained in a collection tank (6) where the lubricating fluid is separated from the carrier gas, remaining in emulsion in said liquid, to be able then to be separated by decanting or other processes with similar results.

2. Device for applying the process described in claim 1, characterized by a closed circuit inserted in a machine or element carrying bearings to be lubricated, with at least one intake in which a lubricating fluid (1) is injected by one or more ducts (2) which distribute this fluid to the friction zones of bearings (3, 3') and collectors (4, 4') through which the fluid immediately, after the lubrication has been performed, reaches at least one feed duct (5) then to be introduced into the liquid contained in a collection tank (6).

EP 0 371 911 A2